# EUROPÄISCHE PATENTANMELDUNG

(11) **EP 0 849 510 A2**
(43) Veröffentlichungstag der Anmeldung: **24.06.1998**
(21) Anmeldenummer: 97119532.6
(22) Anmeldetag: 07.11.1997
(51) Int. Cl.: F16H 63/36

(54) **Schaltsperreinrichtung für ein Zahnräder-Wechselgetriebe**

(30) Priorität: 19.12.1996 DE 19653172
(71) Anmelder: Bayerische Motoren Werke Aktiengesellschaft, 80788 München (DE)
(72) Erfinder: Wagner, Norbert, 80339 München (DE); Esser, Peter-Josef, 82229 Seefeld (DE); Rastinger, Bernhard, 81249 München (DE)

(57) **Zusammenfassung**

Es wird eine Schaltsperreinrichtung für Schaltstangen (1,2,3) eines mehrgängigen Zahnräder-Wechselgetriebes beschrieben, mit mindestens einem in zwei Schaltstangen formschlüssig eingreifenden und von diesen verschiebbaren Sperrglied. Das Sperrglied wird durch Betätigen einer Schaltstange so verschoben, daß mindestens eine andere Schaltstange durch Formschluß mit dem Sperrglied gehäusefest festgelegt wird. Dadurch, daß das Sperrglied gehäusefest angebracht ist, ist seine Montage sehr einfach im Inneren des Getriebegehäuses auszuführen und es ist sehr einfach aufgebaut.

## Beschreibung

Die Erfindung betrifft eine Schaltsperreinrichtung für ein Zahnräder-Wechselgetriebe, nach dem Oberbegriff des Hauptanspruchs.

Die DE 41 18 931 A1 beschreibt unter anderem eine Schaltsperreinrichtung für ein mehrgängiges Zahnräder-Wechselgetriebe mit Zwei Schaltstangen. Die beiden Schaltstangen sind jeweils mit einer Eindrehung versehen. Zwischen beiden Schaltstangen liegt in Höhe der Eindrehung, in einer Bohrung, in einem Zwischengehäuse, eine Sperrkugel. Diese Sperrkugel sperrt bei axialer Bewegung einer Schaltstange die jeweils andere, indem sie aus der Eindrehung der einen, in die Eindrehung der anderen verdrängt wird. Da sich die Sperrkugel in ihrer Bohrung nicht axial bewegen kann, hindert sie die jeweils andere Schaltstange an ihrer Bewegung.

Diese Art einer Schaltsperreinrichtung, über die sich die Schaltstangen selbsttätig gegenseitig sperren, kann auch auf weitere nebeneinanderliegende Schaltstangen übertragen werden. Dazu ist jeweils für eine weitere Schaltstange eine weitere Sperrkugel nötig, die von einem in der anderen Schaltstange liegenden Sperrstift verschoben wird. Es beaufschlagt dann die jeweilig bewegte Schaltstange die Sperrkörper, die wiederum durch Formschluß die nicht bewegten Schaltstangen blockieren.

Ein solcher Sperrmechanismus über Sperrkugeln, die sich zwischen den Schaltstangen hin- und herbewegen hat den Nachteil, daß er kompliziert aufgebaut ist. Es sind viele Teile notwendig, die zum Teil sogar in einem getrennten Gehäuse gelagert werden müssen. Dazu ist eine aufwendige Gehäusebearbeitung, sind Gehäusedurchbrüche und damit Dichtelemente notwendig. Die Montage der Schaltsperreinrichtung kann teilweise nur von außerhalb des Getriebegehäuses ausgeführt werden und es ist eine aufwendige Vollständigkeitskontrolle in der Fertigung notwendig. Durch sich addierende Fertigungstoleranzen bei mehreren Teilen differieren die Reibkräfte in verschiedenen Schaltsperreinrichtungen. Bei Überlast ist es möglich, daß sich die Sperrkugeln ins Gehäuse einhämmern. In beiden Fällen ist die Folge, daß beim Schalten des Getriebes für den Fahrer am Schalthebel undefinierte haptische Rückmeldungen auftreten, die auch als hakelige Schaltung bezeichnet werden.

Deshalb ist es Aufgabe der Erfindung, eine einfach aufgebaute Schaltsperreinrichtung für die Schaltstangen eines mehrgängigen Zahnräder-Wechselgetriebes bereitzustellen, über die eine Schaltstange die jeweils anderen selbsttätig sperrt.

Die Aufgabe wird erfindungsgemäß mit dem kennzeichnenden Merkmal des Anspruchs 1 gelöst. Weitere Ausgestaltungen der Erfindung ergeben sich aus den Unteransprüchen.

Nach der Erfindung ist bei einer Schaltsperreinrichtung für Schaltstangen eines mehrgängigen Zahnräder-Wechselgetriebes mindestens ein Sperrglied gehäusefest angebracht. Ist das Sperrglied gehäusefest angebracht, das von einer Schaltstange verschoben wird und dann zur Blockierung der anderen Schaltstangen in diese formschlüssig eingreift, daß sie gehäusefest festgelegt werden, hat das den Vorteil, daß das Sperrglied einfach bei geöffnetem Getriebegehäuse montierbar ist. Es sind keine Gehäusedurchbrüche und keine zusätzlichen Dichtelemente notwendig, bei einfacherer Gehäusebearbeitung.

Bei einer bevorzugten Ausführung der Erfindung ist das Sperrglied um eine Achse schwenkbar angebracht. Durch diese Anbringung kann das Sperrglied besonders einfach aufgebaut sein.

Bei einer weiteren bevorzugten Ausführung der Erfindung besteht das Sperrglied aus mindestens zwei Sperrkörpern. Werden zwei Sperrkörper verwendet, können bei gehäusefest angebrachtem Sperrglied von drei Schaltstangen jeweils zwei formschlüssig blockiert werden, wenn sich die dritte Schaltstange bewegt. Und zwar dadurch, daß sie das Sperrglied verschiebt und den Formschluß zwischen den beiden anderen Schaltstangen und dem Sperrglied herstellt. Das bringt gegenüber dem Stand der Technik vorteilhafterweise eine Teilereduzierung von fünf Teilen auf drei Teile für die erfindungsgemäße Schaltsperreinrichtung.

Bei einer vorteilhaften Ausführung der Erfindung werden zwei Sperrkörper, die zangenartig eine mittlere von drei Schaltstangen umgreifen, über eine gemeinsame Achse angebracht. Das hat den Vorteil, daß für die Sperrkörper einfache Stanzteile verwendet werden können, die zum Beispiel auf einem Zylinderstift gelagert sind. Durch einen solchen Aufbau ist auch vorteilhafterweise keine Querbohrung in einer Schaltstange notwendig, wie das beim Stand der Technik der Fall ist.

Bei einer weiteren vorteilhaften Ausführung der Erfindung besitzt jeder Sperrkörper mindestens eine Anschlagfläche, die bei Anlage an einer korrespondierenden Anschlagfläche den Schwenkwinkel der Sperrkörper gegeneinander in Schließrichtung der Zange begrenzt.

Eine solche Begrenzung des Schwenkwinkels der Sperrkörper gegeneinander, in Schließrichtung der Zange, hat den Vorteil, daß jeweils ein Sperrkörper durch die Bewegung des anderen mitbewegt werden kann, was zusätzliche Teile zur Bewegungsübertragung zwischen den Sperrkörpern erübrigt.

Sehr einfach wird dies verwirklicht, wenn die Anschlagflächen so angeordnet sind, daß sich die Sperrkörper in Schließrichtung der Zange aneinander abstützen.

Ist das Sperrglied, wie bei einer weiteren vorteilhaften Ausführung der Erfindung, an einem Getriebegehäuse angebracht, so vereinfacht dies seine Montage bzw. Demontage noch mehr.

Ein bevorzugtes Ausführungsbeispiel der Erfindung beschreibt die nachfolgende Beschreibung mit der zugehörigen Zeichnung. Es zeigen:
- Figur 1: eine Ansicht einer Schaltsperreinrichtung gemäß der Erfindung,
- Figur 2: die Schaltsperreinrichtung in der Draufsicht und
- Figur 3 bis Figur 5: jeweils eine Draufsicht und eine Ansicht der Schaltsperreinrichtung mit jeweils zwei gesperrten Schaltstangen, wobei in jeder Figur eine andere Schaltstange nicht gesperrt ist.

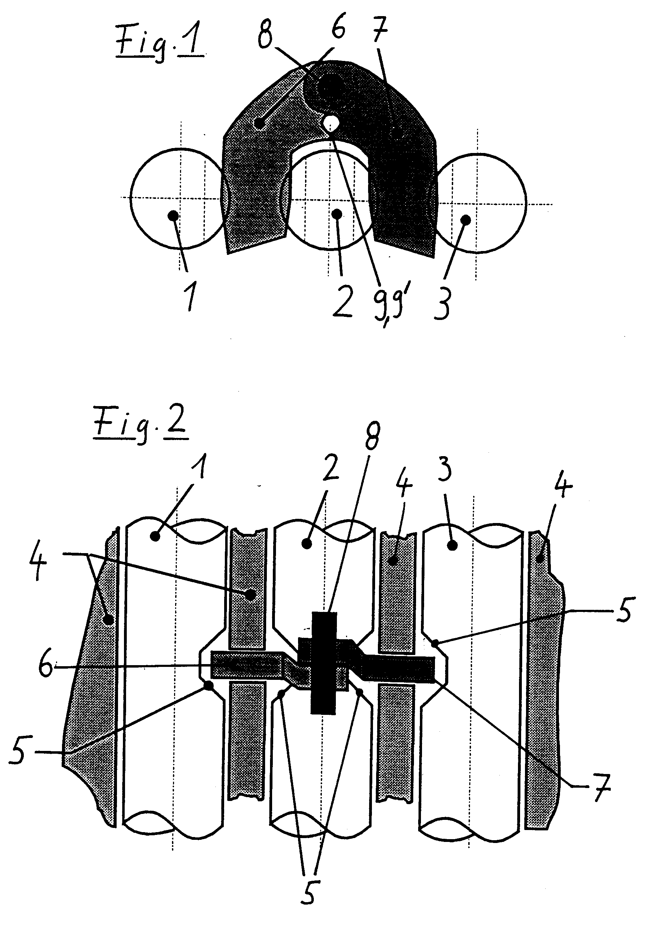

Figur 1 zeigt eine Schaltsperreinrichtung für Schaltstangen 1, 2, 3 eines nicht weiter dargestellten mehrgängigen Zahnräder-Wechselgetriebes. Dabei dient die Schaltstange 1 zum Einlegen des fünften oder des Rückwärtsganges. Während die Schaltstange 2 zum Einlegen des ersten oder des zweiten Ganges und die Schaltstange 3 zum Schalten zwischen dem dritten und dem vierten Gang verwendet wird. Die Schaltsperreinrichtung bewirkt, daß immer nur eine Schaltstange 1 oder 2 oder 3 bewegt werden kann, während gleichzeitig die beiden anderen Schaltstangen 2,3 oder 1,3 oder 1,2 von der Schaltsperreinrichtung blockiert werden. Dazu werden diese durch die Schaltsperreinrichtung formschlüssig an einem Getriebegehäuse 4 (Figur 2) festgelegt. Die Schaltsperreinrichtung selbst ist ebenfalls am Getriebegehäuse 4 angebracht.

Figur 1 und Figur 2 zeigen die Schaltsperreinrichtung in ihrer Grundstellung, in der kein Gang eingelegt ist und die Schaltsperreinrichtung das Einlegen von zwei Gängen gleichzeitig verhindert, was dem gleichzeitigen Bewegen zweier Schalt-Stangen 1,2 oder 2,3 oder 1,3 entspricht.

Die Schaltstangen 1,2,3 besitzen Sperrnuten 5 und zwar Schaltstange 1 und Schaltstange 3 jeweils eine an ihrer zur mittleren Schaltstange 2 hin gerichteten Seite. Die Schaltstange 2 besitzt auf jeder Seite eine Sperrnut 5. In diese Sperrnuten 5 greifen zwei Sperrkörper, ausgebildet als Sperrbleche 6, 7, eines zangenartig ausgebildeten Sperrglieds ein, das die mittlere Schaltstange 2 umgreift. Damit ragen die beiden Sperrbleche 6, 7 in die Zwischenräume zwischen den drei Schaltstangen 1, 2, 3 hinein und zwar an der Stelle, an der sich die Sperrnuten 5 in den Schaltstangen 1, 2, 3 befinden. Die Sperrbleche 6, 7 sind so ausgebildet, daß sie breiter sind als der Zwischenraum zwischen den Schaltstangen 1, 2, 3. Sie erstrecken sich deshalb bis in die Sperrnuten 5. Dies ist in Figur 1 auf die Weise dargestellt, daß sich Sperrbleche 6, 7 und Schaltstangen 1, 2, 3 teilweise überlappen. In Figur 2 kommt dieser Sachverhalt deutlicher zum Ausdruck, da die Sperrnuten 5 in der Draufsicht sichtbar sind. Die Sperrnuten 5 werden zum Außendurchmesser der Schaltstangen 1, 2, 3 hin größer, das heißt, sie besitzen sich aufweitende, schräge Flanken.

Die beiden Sperrbleche 6, 7 sind über eine Achse 8 schwenkbar am Gehäuse 4 angebracht. Sie besitzen zwei miteinander korrespondierende Anschlagflächen 9,9' mit denen sie sich aneinander abstützen, was den Schwenkwinkel der Sperrbleche 6, 7 gegeneinander in Schließrichtung der Zange begrenzt.

Wird nun versucht, zwei der drei Schaltstangen 1, 2, 3 gleichzeitig zu bewegen, was dem Einlegen zweier Gänge gleichkommen würde, so wird durch die schrägen Flanken der Sperrnuten 5 jeweils ein Sperrblech 6 oder 7 formschlüssig am Gehäuse 4 festgelegt und fixiert, da sich die Schaltstangen 2, 3 oder 1, 2 über die Sperrnuten 5 am Sperrblech 6 oder 7 und dieses sich wiederum am Gehäuse 4 abstützt. Dies ist der Fall, wenn jeweils zwei nebeneinander liegende Schalt-Stangen 1, 2 oder 3, 4 gemeinsam bewegt werden.

Werden die beiden außenliegenden Schaltstangen 1 und 3 gleichzeitig bewegt, so kommen beide Sperrbleche 6 und 7 an ihren Außenseiten mit den Flanken der Sperrnuten 5 in formschlüssige Verbindung, was die beiden Sperrbleche 6 und 7 in Schließrichtung der Zange zusammenschwenkt bis die Anschlagflächen 9,9' aneinander anlegen. Ein weiteres Zusammenschwenken der Sperrbleche 6 und 7 ist dadurch nicht mehr möglich und beide Sperrbleche 6 und 7 stützen sich am Gehäuse 4 ab und blockieren das Bewegen der Schaltstangen 1 und 3 gemeinsam durch Formschluß mit dem Gehäuse 4. Der Kraftfluß geht jeweils von den Schaltstangen 1 und 3 über die Flanken der Sperrnuten 5 in die Sperrbleche 6 und 7 und von da jeweils ins Gehäuse 4.

Durch die formschlüssige Anlage der abgeschrägten Flanken der Sperrnuten 5 jeweils auf zwei Seiten der Sperrbleche 6, 7, werden diese in Schwenkrichtung fixiert und unbeweglich festgelegt.

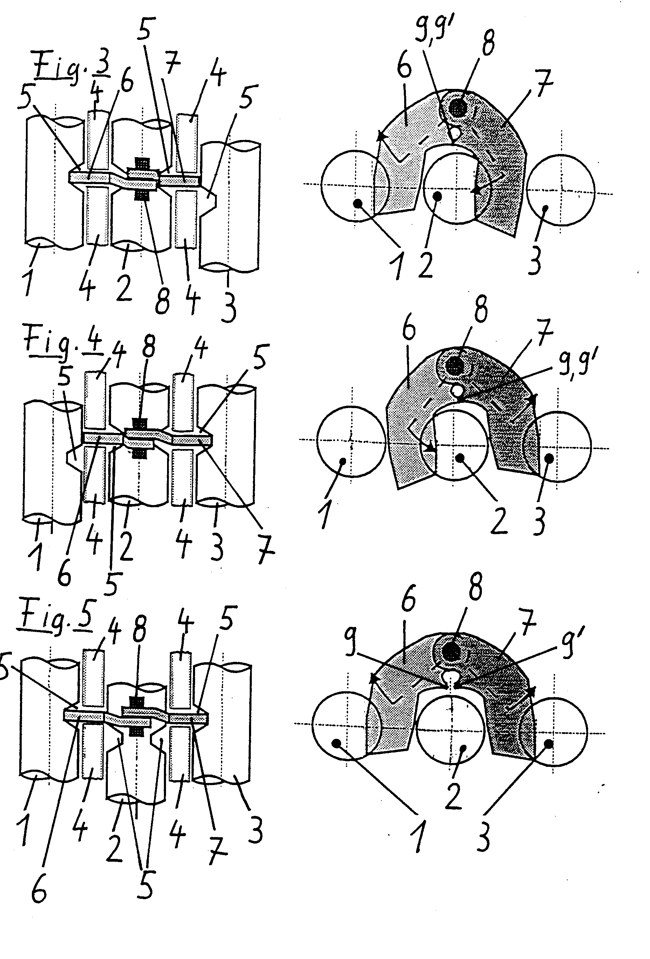

Die Figuren 3 bis 5 zeigen für jeweils einen eingelegten Gang, das heißt, jeweils eine verschobene Schaltstange 1 oder 2 oder 3, die formschlüssige Festlegung der beiden anderen Schaltstangen 2,3 oder 1,3 oder 1,2 am Gehäuse 4.

In Figur 3 ist mit der Schaltstange 3 der dritte oder vierte Gang eingelegt. Dazu ist die Schaltstange 3 gegenüber den Schaltstangen 1 und 2 verschoben. Bei diesem Verschieben der Schaltstange 3 wurde das Sperrblech 7 aus der Sperrnut 5 der Schaltstange 3 verdrängt, indem es um die gehäusefeste Achse 8 verschwenkt wurde. Durch dieses Verschwenken des Sperrblechs 7 wird das Sperrblech 6 ebenfalls um die Achse 8 verschwenkt, da sich die beiden Sperrbleche 6, 7 mit den Anschlagflächen 9,9' aneinander abstützen. Die Verschwenkrichtung der beiden Sperrbleche 6, 7 ist durch Pfeile mit je einer gestrichelt gezeichneten Bezugslinie zur Achse 8 schematisch in der Ansicht der Figur 3 dargestellt. Ebenso ist hier schematisch durch eine gezeichnete Überschneidung von Teilflächen der Schaltstangen 1 und 2 mit Teilflächen der Sperrbleche 6 und 7 dargestellt, daß die beiden Sperrbleche 6, 7 in die Sperrnuten 5 der Schaltstangen 1, 2 eingreifen. Damit sind die Schaltstangen 1 und 2 formschlüssig an dem Gehäuse 4 festgelegt.

Dieselbe Darstellungsweise gilt auch für Figur 4 und Figur 5. In Figur 4 ist mit der verschobenen Schaltstange 1 der fünfte Gang oder der Rückwärtsgang eingelegt. Die Sperrbleche 6, 7 sind dadurch um die Achse 8 in die Sperrnuten 5 der Schaltstangen 2 und 3 eingerückt und legen diese am Gehäuse 4 fest. Die Sperrnut 5 der Schaltstange 1, bei deren Bewegung das Sperrblech 6 verschwenkt wurde ist nicht formschlüssig mit dem Gehäuse 4 verbunden. Das Sperrblech 7 wurde deshalb mitverschwenkt, weil es an dem Sperrblech 6 über die Anschlagflächen 9,9' anliegt. In der Ansicht ist der Schwenkwinkel wieder durch symbolische Pfeile mit Bezugslinie angedeutet gezeichnet und der Formschluß zwischen den Schaltstangen 2 und 3 und den Sperrblechen 6 und 7 ergibt sich aus der symbolisch gezeichneten Überlappung deren Teilflächen.

In Figur 5 ist durch Verschieben der Schaltstange 2 der erste oder der zweite Gang eingelegt. Aus beiden Sperrnuten 5 der Schaltstange 2 wurden dabei die Sperrbleche 6 und 7 verdrängt, was zu einer Schwenkbewegung der Sperrbleche 6, 7 um die Achse 8 in entgegengesetzter Richtung entsprechend der Pfeile in der Ansicht führte. Das Sperrblech 7 legt jetzt die Schaltstange 3 formschlüssig mit dem Gehäuse 4 fest, da es mit einer Teilfläche in die Sperrnut 5 der Schaltstange 3 hineinragt. Das Sperrblech 6 legt auf die gleiche Weise die Schaltstange 1 formschlüssig mit dem Gehäuse 4 fest. Die beiden Anschlagflächen 9,9' liegen nicht aneinander an, da die beiden Sperrbleche 6 und 7 in Öffnungsrichtung der Zange, die sie bilden, auseinandergeschwenkt wurden.

## Patentansprüche

1. Schaltsperreinrichtung für Schaltstangen (1,2,3) eines mehrgängigen Zahnräder-Wechselgetriebes, insbesondere von Kraftfahrzeugen, mit mindestens einem in zwei Schaltstangen (1,2,3) formschlüssig eingreifenden und von diesen verschiebbaren Sperrglied, das durch Betätigen einer Schaltstange (1,2,3) so verschoben wird, daß mindestens eine andere Schaltstange (1,2,3) durch Formschluß mit dem Sperrglied gehäusefest festgelegt wird, dadurch gekennzeichnet, daß das Sperrglied gehäusefest angebracht ist.

2. Schaltsperreinrichtung nach Anspruch 1, dadurch gekennzeichnet, daß das Sperrglied um eine Achse (8) schwenkbar angebracht ist.

3. Schaltsperreinrichtung nach Anspruch 1 oder 2, dadurch gekennzeichnet, daß das Sperrglied aus mindestens zwei Sperrkörpern besteht.

4. Schaltsperreinrichtung nach den Ansprüchen 2 und 3, dadurch gekennzeichnet, daß zwei Sperrkörper über eine gemeinsame Achse (8) angebracht sind und zangenartig eine mittlere (2) von drei Schaltstangen (1,2,3) umgreifen.

5. Schaltsperreinrichtung nach Anspruch 4, dadurch gekennzeichnet, daß jeder Sperrkörper mindestens eine Anschlagfläche (9) besitzt, die bei Anlage an einer korrespondierenden Anschlagfläche (9') den Schwenkwinkel der Sperrkörper gegeneinander in Schließrichtung der Zange begrenzen.

6. Schaltsperreinrichtung nach Anspruch 5, dadurch gekennzeichnet, daß die Anschlagflächen (9,9') so angeordnet sind, daß sich die Sperrkörper aneinander abstützen.

7. Schaltsperreinrichtung nach einem der Ansprüche 1 bis 6, dadurch gekennzeichnet, daß das Sperrglied an einem Getriebegehäuse (4) angebracht ist.
